# EUROPEAN PATENT APPLICATION

(11) **EP 4 418 226 A1**
(43) Date of publication of application: **21.08.2024**
(21) Application number: 22880287.2
(22) Date of filing: 11.10.2022
(51) Int. Cl.: G07F 17/12, G07F 17/00

(54) **SELF-SERVICE PICKUP DEVICE, SELF-SERVICE PICKUP METHOD, AND CONTROL DEVICE**

(30) Priority: 15.10.2021 CN 202111202604
(71) Applicant: Beijing Jingdong Zhenshi Information Technology Co., Ltd., Beijing, Beijing 100086 (CN)
(72) Inventor: LUO, Chengyi, Beijing 100086 (CN)
(74) Representative: Page White Farrer
(86) International application number: PCT/CN2022/124533
(87) International publication number: WO 2023/061350

(57) **Abstract**

Provided in the present disclosure are a self-service pickup device, a self-service pickup method, and a control device for self-service pickup, which relate to the field of logistics. The self-service pickup device comprises : an annular conveyor, self-service pickup ports for receiving package extraction verification instructions and extracting packages, and a first conveyor, which is in butt joint with the annular conveyor and used for conveying the packages between the annular conveyor and a temporary storage warehouse of the packages, wherein steerable rotating wheel apparatuses are provided on the annular conveyor, and one rotating wheel apparatus is arranged at the junction of the annular conveyor and each self-service pickup port. The self-service pickup device can be used in cooperation with the temporary storage warehouse, which has a larger storage space, of the packages, so as to provide a self-service pickup service for more packages, thereby greatly improving the self-service pickup service capacity.

## Description

### CROSS-REFERENCE TO RELATED APPLICATIONS

The present application is based on and claims priority to China Patent Application No. 202111202604.0 filed on October 15, 2021, the disclosure of which is incorporated by reference herein in its entirety.

### TECHNICAL FIELD

The present disclosure relates to the field of logistics, in particular to a self-service pickup device, a self-service pickup method and a control device for self-service pickup.

### BACKGROUND

The self-service pickup cabinet is a self-service pickup device with a cabinet-style structure. The self-service pickup cabinet is provided with many compartments, each of which may store a package. After receiving a package pickup verification instruction, the user may pick up own package from a corresponding compartment by using the package pickup verification instruction.

Restricted by the number of compartments, the self-service pickup cabinet has a limited storage space. If all the compartments of the self-service pickup cabinet are occupied, the self-service pickup cabinet will be unable to accept a new package so that it is impossible to provide a self-service pickup service for a new package.

### SUMMARY

According to some embodiments of the present disclosure, a self-service pickup device is provided. The self-service pickup device comprises: an endless conveyor; a self-service pickup port configured to receive a package pickup verification instruction; and a first conveyor docked with the endless conveyor, and configured to convey a package between the endless conveyor and a temporary warehouse of the package, wherein the endless conveyor is provided with a steering wheel device which is steerable and arranged at a junction of the endless conveyor and the self-service pickup port.

In some embodiments, the steering wheel device is further arranged at a junction of the endless conveyor and the first conveyor.

In some embodiments, the self-service pickup device further comprises: an automated transportation device configured to perform an outbound task and transport a target package from a target goods location of the temporary warehouse to a corresponding target first conveyor, or perform an inbound task and transport a target package from the corresponding target first conveyor to the target goods location of the temporary warehouse.

In some embodiments, the self-service pickup device further comprises: a second conveyor docked with the endless conveyor, the second conveyor comprising at least one of an outlet conveying assembly or an inlet conveying assembly, wherein the inlet conveying assembly is configured to convey a normal package ready to enter the endless conveyor, and the outlet conveying assembly is configured to convey an abnormal package from the endless conveyor, or convey an empty turnover box from which a package was taken away from the endless conveyor.

In some embodiments, the first conveyor comprises: an inlet conveying assembly configured to convey an outbound package ready to enter the endless conveyor from the temporary warehouse; and an outlet conveying assembly configured to convey an inbound package ready to enter the temporary warehouse from the endless conveyor.

In some embodiments, the self-service pickup port is provided with a gravity detection device and a telescopic partition triggered by a gravity change, and a recycling place for an empty turnover box from which a package was taken away is provided below the telescopic partition.

In some embodiments, the self-service pickup port is plural, or the first conveyor is plural.

In some embodiments, the self-service pickup device further comprises: a control device configured to control the target steering wheel device to steer, or send an outbound task or an inbound task to the automated transportation device.

According to some embodiments of the present disclosure, a self-service pickup method is provided. The self-service pickup method comprises: obtaining a package pickup verification instruction received by any target self-service pickup port, wherein there is a correspondence among the package pickup verification instruction, a number of a target goods location, a number of a target turnover box and a number of a target package; transporting the target turnover box loaded with the target package corresponding to the package pickup verification instruction from the target goods location in the temporary warehouse to an outbound target first conveyor, the target turnover box entering the endless conveyor for rotation from the outbound target first conveyor; and assigning a flow direction corresponding to the number of the target turnover box to a number of the target self-service pickup port, to control a first target steering wheel device to guide the target turnover box on the endless conveyor into the target self-service pickup port by steering, a user picking up a target package from the target self-service pickup port, wherein the first target steering wheel device is a steering wheel device at a junction of the target self-service pickup port and the endless conveyor.

In some embodiments, t transporting the target turnover box loaded with the target package corresponding to the package pickup verification instruction from the target goods location in the temporary warehouse to an outbound target first conveyor comprises: generating and sending an outbound task to an automated transportation device for instructing the automated transportation device to transport the target turnover box from the target goods location in the temporary warehouse to the outbound target first conveyor, according to the number of the target goods location and the number of the target turnover box corresponding to the package pickup verification instruction, and a number of the outbound target first conveyor with a vacant position.

In some embodiments, the outbound task comprises: a delivery object, which is the number of the target turnover box; a transporting departure, which is the number of the target goods location in the temporary warehouse; and a transporting destination, which is the number of the outbound target first conveyor.

In some embodiments, assigning a flow direction corresponding to the number of the target turnover box to a number of the target self-service pickup port comprises: determining whether the target self-service pickup port has a cache resource; assigning the flow direction corresponding to the number of the target turnover box to the number of the target self-service pickup port in response to the target self-service pickup port having a cache resource, or temporarily not assigning the flow direction corresponding to the number of the target turnover box in response to the target self-service pickup port having no cache resource to make the target turnover box rotate in the endless conveyor.

In some embodiments, the self-service pickup method further comprising: in response to the target package not being picked up overtime, controlling the abnormal target turnover box to enter the endless conveyor for rotation via the first target rotating wheel device, and assigning a flow direction corresponding to the number of the target turnover box to outlet conveying assembly of the second conveyor to control the second target steering wheel device to guide the abnormal target turnover box on the endless conveyor into the outlet conveying assembly of the second conveyor by steering, to remove the abnormal target turnover box, wherein the second target steering wheel device is a steering wheel device at a junction of the outlet conveying assembly of the second conveyor and the endless conveyor.

In some embodiments, the self-service pickup method further comprising: controlling the empty target turnover box to enter the endless conveyor for rotation via the first target steering wheel device after the target package is picked up, and assigning a flow direction corresponding to the number of the target turnover box to outlet conveying assembly of the second conveyor to control the second target steering wheel device to guide the empty target turnover box on the endless conveyor into the outlet conveying assembly of the second conveyor by steering, to remove the empty target turnover box, wherein the second target steering wheel device is a steering wheel device at a junction of the outlet conveying assembly of the second conveyor and the endless conveyor.

In some embodiments, the self-service pickup method further comprising: prompting to remove the empty target turnover box after the target package is picked up; or triggering a telescopic partition to retract in response to a gravity detection device at the target self-service pickup port detecting that a gravity above the telescopic partition is reduced to a preset range, to make the empty target turnover box fall to a recycling place for an empty turnover box below the telescopic partition, and then controlling the telescopic partition to automatically extend.

In some embodiments, the self-service pickup method further comprising: updating the inventory status of the target goods location to unoccupied after the target turnover box is removed from the target goods location in the temporary warehouse; and updating the status of the automated transportation device to a no-task status after the target turnover box is transported to the outbound target first conveyor.

In some embodiments, the package pickup verification instruction is also correlated with a number of a target order, wherein the target order corresponds to one or more target packages, the self-service pickup method further comprising: updating order status of the target order to delivered after all the target packages are picked up.

In some embodiments, the self-service pickup method further comprising: obtaining the number of the target turnover box identified and reported by a scanning device located at an inlet conveying assembly of a second conveyor, wherein the target turnover box loaded with the target package enters the endless conveyor via the inlet conveying assembly of the second conveyor before a user receives the package pickup verification instruction;

assigning the flow direction corresponding to the number of the target turnover box to a number of an inbound target first conveyor with a vacant position, and controlling a third target steering wheel device to guide the target turnover box on the endless conveyor to the inbound target first conveyor by steering, wherein the third target steering wheel device is a steering wheel device at a junction of the inbound target first conveyor and the endless conveyor; assigning the number of the target goods location vacant in the temporary warehouse to the number of the target turnover box; transporting the target turnover box from the inbound target first conveyor to the target goods location in the temporary warehouse; and generating the package pickup verification instruction and informing the user, and establishing the correspondence among the package pickup verification instruction, the number of the target goods location, the number of the target turnover box and the number of the target package.

In some embodiments, transporting the target turnover box from the inbound target first conveyor to the target goods location in the temporary warehouse comprises: generating and sending an inbound task to the automated transportation device for instructing the automated transportation device to transport the target turnover box from the inbound target first conveyor to the target goods location in the temporary warehouse, according to the number of the inbound target first conveyor and the number of the target goods location in the temporary warehouse corresponding to the number of the target turnover box.

In some embodiments, the inbound task comprises: a transporting object, which is the number of the target turnover box, a transporting departure, which is the number of the inbound target first conveyor, and a transporting destination, which is the number of the target goods location in the temporary warehouse.

In some embodiments, the self-service pickup method further comprising: updating the inventory status of the target goods location to occupied, or updating the status of the automated transportation device to a non-task status, after the target turnover box is transported to the target goods location in the temporary warehouse; or releasing a cache resource of the inbound target first conveyor occupied by the target turnover box after the target turnover box is moved from the inbound target first conveyor.

According to some embodiments of the present disclosure, a control device for self-service pickup is provided. The device comprises: a memory; and a processor coupled to the memory, wherein the processor is configured to perform a self-service pickup method based on instructions stored in the memory.

According to some embodiments of the present disclosure, a non-transitory computer-readable storage medium is provided. The storage medium stores a computer program, which is executed by a processor to realize the steps of the self-service pickup method.

### BRIEF DESCRIPTION OF THE ACCOMPANYING DRAWINGS

A brief introduction will be given below for the accompanying drawings required for use in the description of the embodiments or the relevant art. The present disclosure may be more clearly understood according to the following detailed description with reference to the accompanying drawings.

It is obvious that, the accompanying drawings described below are merely some of the embodiments of the present disclosure. For those skilled in the art, other accompanying drawings may also be obtained according to such accompanying drawings on the premise that no inventive effort is involved.
Fig. 1 shows a schematic view of a self-service pickup device according to some embodiments of the present disclosure.
Fig. 2 shows a schematic view of an automatic inbound method capable of automatically storing a package in a temporary warehouse according to some embodiments of the present disclosure.
Fig. 3 shows a schematic view of a self-service pickup method according to some embodiments of the present disclosure.
Fig. 4 shows a schematic structural view of a control device for self-service pickup according to some embodiments of the present disclosure.

### DETAILED DESCRIPTION

The technical solution in the embodiments of the present disclosure will be explicitly and completely described below in conjunction with the accompanying drawings in the embodiments of the present disclosure.

Unless otherwise specified, descriptions such as "first", "second" and "third" in the present disclosure are used to distinguish different objects, rather than presenting a meaning such as size or time sequence.

In some embodiments of the present disclosure, a new self-service pickup device and a corresponding self-service pickup method are provided, which are capable of providing a self-service pickup service for more packages by cooperating with a temporary warehouse of packages with a larger storage space in use and greatly improving the self-service pickup capacity.

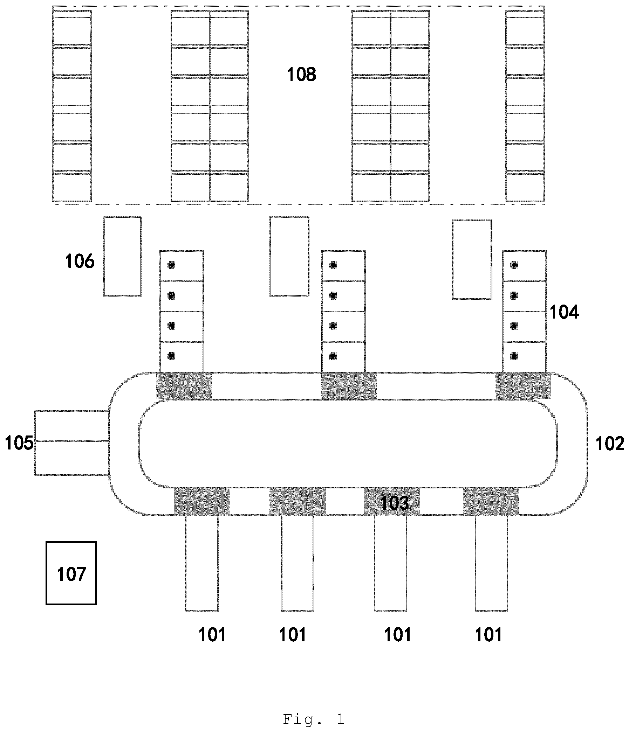

Fig. 1 shows a schematic view of a self-service pickup device according to some embodiments of the present disclosure.

As shown in Fig. 1, the self-service pickup device of this embodiment comprises: a self-service pickup port 101, an endless conveyor 102, a steering wheel device 103, a first conveyor 104, further comprises: a second conveyor 105, an automated transportation device 106, a control device 107 and other devices. Each device will be described respectively below.

The self-service pickup port 101 is configured to receive a package pickup verification instruction, so that the user may pick up a package. The self-service pickup port 101 may be plural to provide a self-service pickup service for a plurality of users at the same time. The self-service pickup port 101 may also be single. The self-service pickup port 101 may be provided with an information input device for receiving information such as a package pickup verification instruction. The information input device comprises, for example, a tablet computer, a scanning device, or other devices capable of inputting information. The package pickup verification instruction comprises, but is not limited to a pickup code, a two-dimensional code, or other forms of codes for pickup. For example, the tablet computer receives a pickup code manually input by the user, or the scanning device scans a two-dimensional code presented by the user, or the information input device obtains the user identity information corresponding to the user terminal that scans the Two-dimensional code. In addition, according to the needs of a turnover box recycling method, the self-service pickup port 101 may also be provided with a gravity detection device and a telescopic partition triggered by a gravity change, wherein a recycling place for an empty turnover box from which a package was taken away may be provided below the telescopic partition.

The endless conveyor 102 is a device with an end-to-end loop structure capable of conveying goods. In this disclosure, the endless conveyor 102 not only has the function of conveying a package, but also has the function of caching a package. The package that is temporarily not assigned to a destination can rotate and wait in the endless conveyor 102, and the package that is assigned to a destination can be exported from a corresponding exit.

The endless conveyor 102 is provided with a steering wheel device 103 that is steerable. For example, the steering wheel device 103 may work in a default direction and redirect according to the control to change a flow direction of an object located in the steering wheel device 103. The steering wheel device 103 may be arranged at a junction of the endless conveyor 102 and each self-service pickup port 101, so as to export a package from the endless conveyor 102 to a corresponding self-service pickup port 101 when the package is dispatched out of warehouse. The steering wheel device 103 may also be arranged at a junction of the endless conveyor 102 and each first conveyor 104, so as to export a package from the endless conveyor 102 to a corresponding first conveyor 104 when a package enters warehouse.

The first conveyor 104 is docked with the endless conveyor 102 for conveying a package between the endless conveyor 102 and the temporary warehouse of packages. The first conveyor 104 may comprise: an inlet conveying assembly for conveying an outbound package that is dispatched out of the temporary warehouse and ready to enter the endless conveyor 102, and an outlet conveying assembly for conveying an inbound package that is dispatched out of the endless conveyor 102 and ready to enter the temporary warehouse. In order to improve the inbound and outbound efficiencies, the first conveyor 104 may be plural. Wherein a steering wheel device 103 may be provided at a junction of the endless conveyor 102 and an outlet conveying assembly of each first conveyor 104, so as to export a package from the endless conveyor 102 to an outlet conveying assembly of a corresponding first conveyor 104 when a package enters warehouse. The first conveyor 104 may be, for example, straight-linear, so that a package can be conveyed more rapidly.

The second conveyor 105 is docked with the endless conveyor 102. The second conveyor 105 may comprise: at least one of an outlet conveying assembly or an inlet conveying assembly. Wherein the inlet conveying assembly is configured to convey a normal package ready to enter the endless conveyor 102. The outlet conveying assembly is configured to convey an abnormal package from the endless conveyor 102, or to convey an empty turnover box from which a package was taken away from the endless conveyor 102. In order to improve the inbound and outbound efficiencies, the second conveyor 105 may be plural. The second conveyor 105 may be straight-linear, for example, so that a package can be conveyed more rapidly. The second conveyor 105, for example, the inlet conveying assembly of the second conveyor 105, may be provided with a scanning device for identifying a number of a target turnover box and the like.

The automated transportation device 106 is a smart device capable of automatically transporting goods according to an instruction. The automated transportation device 106 may be, for example, a freight robot, but is not limited to an example as listed. The automated transportation device 106 is configured to perform an outbound task to convey a target package from a target goods location of the temporary warehouse to a corresponding target first conveyor 104, or to perform an inbound task to convey a target package from a corresponding target first conveyor 104 to a target goods location of the temporary warehouse.

The control device 107 is a device with a control function, for example, a processor or including a processor. The control device 107 is configured to control the steering of the target steering wheel device 103, or to send an outbound task or an inbound task to the automated transportation device 106. The control device 107 is communicatively connected with other communication objects so as to transmit various information. Wherein the communicative connection modes comprise but are not limited to various wireless connection modes and wired connection modes. The communication object of the control device 107 may be a controlled object, or an object required to report the information to the control device 107. The communication object of the control device 107 comprises, but is not limited to, the automated transportation device 106, the steering wheel device 103, the information input device, the scanning device, and the like.

Fig. 1 also shows a temporary warehouse 108 for packages. The temporary warehouse 108 has a very large storage space. The temporary warehouse 108 has many goods shelves and goods locations, wherein each goods location may store a package or a turnover box loaded with a package. The temporary warehouse 108 has a larger storage space than an ordinary self-service pickup cabinet. The self-service pickup device can cooperate with the temporary warehouse 108 with a larger storage space in use, thereby providing a self-service pickup service for more packages, and greatly improving the self-service pickup service capacity.

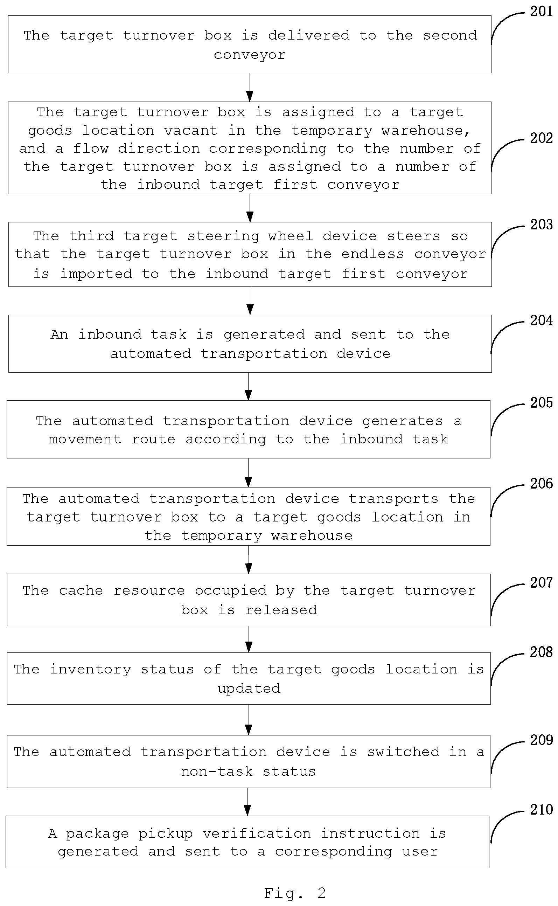

By way of a certain method, the package is stored in the temporary warehouse. Then, a self-service pickup service may be provided for users by using the self-service pickup device cooperating with the temporary warehouse. Wherein the package may be stored in the temporary warehouse by a manual method. The present disclosure provides an automatic inbound method, which can automatically store a package in a temporary warehouse without manual intervention, as described below in conjunction with Fig. 2.

Fig. 2 shows a schematic view of an automatic inbound method capable of automatically storing a package in a temporary warehouse according to some embodiments of the present disclosure.

As shown in Fig. 2, the automatic inbound method comprises: steps 201 to 210.

In step 201, after a target package of a target order is delivered to a target turnover box, the target turnover box is delivered to the second conveyor, and the scanning device located at the inlet conveying assembly of the second conveyor identifies the number of the target turnover box and reports the same to the control device. Wherein the number of the target turnover box, the number of the target package and the number of the target order have a correspondence.

In step 202, the control device judges whether the temporary warehouse is present with a vacant goods location, and if the temporary warehouse is present with a vacant goods location, a vacant target goods location in the temporary warehouse is assigned for the target turnover box (the target goods location is identified by the number of the target goods location); and judges whether each first conveyor is present with a vacant position, and if any first conveyor is present with a vacant position, a flow direction to a number of a first conveyor with a vacant position (referred to as a number of an inbound target first conveyor)is assigned for the number of the target turnover box to the number of the target turnover box, and if all the first conveyors are not present with a vacant position, a number of the first conveyor is not temporarily assigned, so that the target turnover box rotates in the endless conveyor until any first conveyor is present with a vacant position; and if the temporary warehouse is not present with a vacant goods location, a warning will be sent to prompt that the temporary warehouse is full.

In step 203, the target turnover box enters the endless conveyor via the second conveyor, and passes through various steering wheel devices during the rotating process in the endless conveyor, each steering wheel device identifies the number of the target turnover box and obtains a flow direction corresponding to the number of the target turnover box from the control device, wherein the target steering wheel device corresponding to the number of the target turnover box (referred to as a third target steering wheel device, also that is, a steering wheel device at a junction of the inbound target first conveyor and the endless conveyor) steers so that the target turnover box in the endless conveyor is imported to the inbound target first conveyor and cached in a vacant position of the inbound target first conveyor, while other non-third target steering wheel devices do not steer, so that the target turnover box rotates in the endless conveyor.

In step 204, the control device generates an inbound task according to an inbound target first conveyor corresponding to the number of the target turnover box and a target goods location in the temporary warehouse, and sends the same to the automated transportation device. The inbound task comprises information of the inbound task, such as a transporting object, which is the number of the target turnover box, a transporting departure, which is the number of the inbound target first conveyor, and a transporting destination, which is the number of the target goods location in the temporary warehouse, for instructing the automated transportation device to convey the target turnover box from the inbound target first conveyor to a target goods location in the temporary warehouse.

In step 205, the automated transportation device receives the inbound task and generates a movement route according to the inbound task, wherein the movement route is original location-inbound target first conveyor-target goods location-original location.

The movement route may be changed. For example, after reaching the target goods location, if a new task is received, there is no need to return to the original location, but directly moving from a current location to a location specified by a new task.

In step 206, the automated transportation device moves according to the movement route and performs a corresponding inbound task, and moves from the original location to the inbound target first conveyor; identities, positions and picks up the target turnover box at the inbound target first conveyor according to the number of the target turnover box, and then transports the target turnover box to a target goods location in the temporary warehouse.

In step 207, after the target turnover box is picked up by the automated transportation device, the cache resource of the inbound target first conveyor occupied by the target turnover box is released.

In step 208, after the target turnover box is transported to a target goods location in the temporary warehouse, the inventory status of a target goods location is updated, for example, a target goods location is marked as occupied.

In step 209, after the target turnover box is transported to a target goods location in the temporary warehouse, the resource of the automated transportation device is released, and the automated transportation device is switched in a non-task status. If a new task is received, for example, a new inbound task or a new outbound task, a new task is performed, and if no new task is received, it returns to the original location.

In step 210, after the target turnover box is transported to a target goods location in the temporary warehouse, a package pickup verification instruction is generated and sent to a corresponding user, and a correspondence among the package pickup verification instruction, the number of the target goods location, the number of the target turnover box, the number of the target package and the number of the target order is established.

In the above-described embodiments, the automatic inbound method of automatically storing a package in a temporary warehouse is implemented by using the self-service pickup device, without manual intervention so that labor is saved.

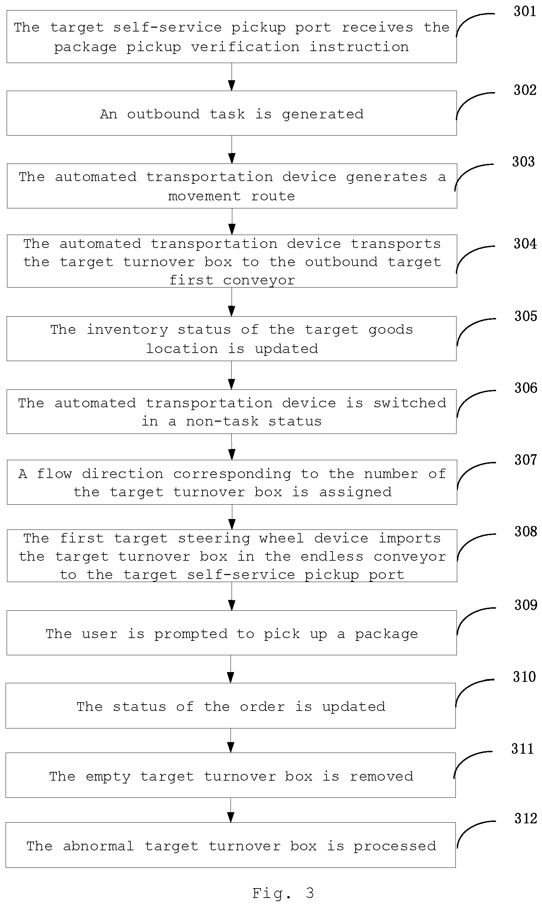

In conjunction with Fig. 3, the self-service pickup method realized by using the self-service pickup device and cooperating with the temporary warehouse will be described below to provide a self-service pickup service for the user.

Fig. 3 shows a schematic view of a self-service pickup method according to some embodiments of the present disclosure.

As shown in Fig. 3, the self-service pickup method comprises: steps 301 to 312.

In step 301, the user inputs a package pickup verification instruction through the information input device at any target self-service pickup port, and the target self-service pickup port receives the package pickup verification instruction. Wherein as described previously, there is a correspondence among the package pickup verification instruction, the number of the target goods location, the number of the target turnover box, the number of the target package and the number of the target order.

In step 302, the control device verifies the package pickup verification instruction, for example, whether the package pickup verification instruction exists, whether the corresponding state is in a state of not being picked up, or the like. If the package pickup verification instruction exists and is in a state of not being picked up, the package pickup verification instruction will be verified.

If the package pickup verification instruction is verified, the control device generates an outbound task according to the number of the target goods location corresponding to the package pickup verification instruction, the number of the target turnover box, and a number of the first conveyor (referred to as a number of the outbound target first conveyor) currently with a vacant position, and sends the same to the automated transportation device. Wherein the outbound task comprises information of the outbound task, such as a delivery object, which is the number of the target turnover box, a transporting departure, which is the number of the target goods location in the temporary warehouse, and a transporting destination, which is the number of the outbound target first conveyor, for instructing the automated transportation device to convey the target turnover box from the target goods location in the temporary warehouse to the outbound target first conveyor.

In step 303, the automated transportation device receives an outbound task, and generates a movement route according to the outbound task, wherein the movement route is: original location-target goods location-outbound target first conveyor-original location.

The movement route may be changed. For example, after reaching the outbound destination first conveyor, if a new task is received, there is no need to return to the original location, but directly moving from a current location to a location specified by the new task.

In step 304, the automated transportation device moves according to the movement route and performs a corresponding outbound task, and moves from the original location to the vicinity of the target goods location of the temporary warehouse, picks up the target turnover box from the target goods location, and then conveys the target turnover box to the outbound target first conveyor, so that the target turnover box enters the endless conveyor via the outbound target first conveyor.

In step 305, after the target turnover box is picked up by the automated transportation device, the inventory status of the target goods location is updated, for example, the target goods location is marked as unoccupied.

In step 306, after the target turnover box is transported to the outbound target first conveyor, the resource of the automated transportation device is released, and the automated transportation device is switched in a non-task status. If a new task is received, for example, a new inbound task or a new outbound task, the new task is performed, and if no new task is received, it is possible to return to the original location.

In step 307, the control device judges whether the target self-service pickup port has a cache resource. If the target self-service pickup port has a cache resource, the flow direction corresponding to the number of the target turnover box is assigned to a number of the target self-service pickup port; and if the target self-service pickup port does not have a cache resource, the flow direction corresponding to the number of the target turnover box is temporarily not assigned, so that the target turnover box rotates in the endless conveyor.

In step 308, the target turnover box passes through various steering wheel devices during the rotating process in the endless conveyor, each steering wheel device identifies the number of the target turnover box and obtains a flow direction corresponding to the number of the target turnover box from the control device, wherein the first target steering wheel device (also that is, a steering wheel device at a junction of the target self-service pickup port and the endless conveyor) steers so that the target turnover box in the endless conveyor is imported to the target self-service pickup port, while other non-first target steering wheel devices do not steer, so that the target turnover box rotates in the endless conveyor.

In step 309, after the target turnover box is imported to the target self-service pickup port, the information input device at the target self-service pickup port prompts (which may be prompted by methods such as voice or information display) the user to pick up a package, for example, "a package has reached the self-service pickup port, please pick up the package". When necessary, it is also possible to prompt a pickup method, for example, clicking a control on the screen to pick up a package.

In step 310, when the user clicks the screen to pick up a package, the gate of the target self-service pickup port is open. When the user picks up a target package from the target self-service pickup port, the gate is closed. If there is only one package in the target order corresponding to the target package, the order status is updated as delivered; if there are a plurality of packages in the target order corresponding to the target package, click "Pick up a next package" to continue pickup until all the packages in the target order are picked up, and then the order status is updated as delivered.

In step 311, after the user takes away each target package, the empty target turnover box corresponding to the target package is removed, and the cache resource of the target self-service pickup port is released in time. Wherein the method of removing the target turnover box comprises but is not limited to the following three methods.

In a first method, it is prompted to remove the empty target turnover box, so that the user or staff may remove the empty target turnover box in time.

In a second method, when the gravity detection device at the target self-service pickup port detects that a gravity above the telescopic partition is reduced to a preset range, the telescopic partition is triggered to retract, so that the empty target turnover box falls to a recycling place for an empty turnover box below the telescopic partition, and then the telescopic partition automatically extends. The turnover box in a recycling place may be recycled regularly. The retraction and extension of the partition may be spontaneously triggered by the partition cooperating with the gravity detection device or controlled by the control device.

In a third method, for the empty target turnover box, the control device updates a flow direction corresponding to the number of the target turnover box to the outlet conveying assembly of the second conveyor, and the target turnover box is moved back to the first target steering wheel device, so that the target turnover box enters the endless conveyor via the first target steering wheel device and passes through various each steering wheel device, and each steering wheel device identifies the number of the target turnover box, and obtains a flow direction corresponding to the number of the target turnover box from the control device, wherein the second target steering wheel device (also that is, a steering wheel device at a junction of the outlet conveying assembly of the second conveyor and the endless conveyor) steers so that the target turnover box in the endless conveyor is imported to the outlet conveying assembly of the second conveyor so as to remove the empty target turnover box, while other non-second target steering wheel devices do not steer, so that the target turnover box rotates in the endless conveyor.

In step 312, if the target package is still not picked up overtime, for such abnormal target turnover box, the control device updates a flow direction corresponding to the number of the target turnover box to the outlet conveying assembly of the second conveyor, and the target turnover box is moved back to the first target steering wheel device, so that the target turnover box enters the endless conveyor wheel via the first target steering wheel device and passes through various steering wheel devices, and each steering wheel device identifies the number of the target turnover box, and obtains a flow direction corresponding to the number of the target turnover box from the control device, wherein the second target steering wheel device (also that is, a steering wheel device at a junction of the outlet conveying assembly of the second conveyor and the endless conveyor) steers so that the target turnover box in the endless conveyor is imported to the outlet conveying assembly of the second conveyor so as to remove the abnormal target turnover box, while other non-second target steering wheel devices do not steer, so that the target turnover box rotates in the endless conveyor.

In the above-described embodiments, the self-service pickup method is implemented by using the self-service pickup device and cooperating with the temporary warehouse so as to provide a self-service pickup service for the user. In addition, it is also possible to automatically process a package with abnormal pickup, with a favorable robustness; and it is also possible to automatically process an empty turnover box after pickup, which is convenient for recycling. If the self-service pickup port is plural, it is possible to provide a self-service pickup service for a plurality of users at the same time.

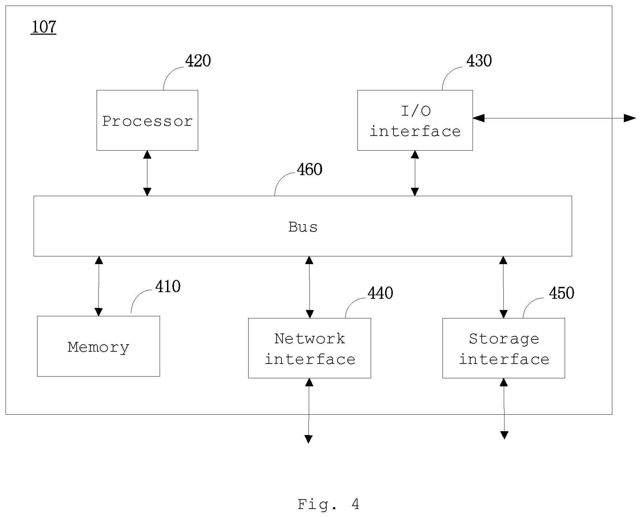

Fig. 4 shows a structural schematic view of a control device for self-service pickup according to some embodiments of the present disclosure.

As shown in Fig. 4, the control device 107 of this embodiment comprises: a memory 410 and a processor 420 coupled to the memory 410, wherein the processor 420 is configured to perform the self-service pickup method and/or the automatic inbound method according to any some of the aforementioned embodiments based on instructions stored in the memory 410.

Wherein the memory 410 may comprise, for example, a system memory, a fixed non-volatile storage medium, or the like. The system memory stores, for example, an operation system, an application, a boot loader, and other programs.

The control device 107 may further comprise an I/O interface 430, a network interface 440, a storage interface 450, and the like. These interfaces 430, 440, 450 as well as the memory 410 and the processor 420 therebetween may be connected, for example, via a bus 460. Wherein the I/O interface 430 provides a connection interface for input and output devices such as a display, a mouse, a keyboard, and a touch screen. The network interface 440 provides a connection interface for various networked devices. The storage interface 450 provides a connection interface for an external storage device such as an SD card or a USB flash disk.

Those skilled in the art will appreciate that the embodiments of the present disclosure may be provided as a method, system, or computer program product. Accordingly, the present disclosure may take the form of an entirely hardware embodiment, an entirely software embodiment, or a combination of software and hardware aspects. Moreover, the present disclosure may take the form of a computer program product embodied in one or more non-transitory computer- readable storage media (including but not limited to disk memory, CD-ROM, optical memory, and the like) containing computer program codes therein.

The present disclosure is described with reference to the flow charts and/or block views of methods, devices (systems), and computer program products according to the embodiments of the present disclosure. It will be understood that each step and/or block of the flow charts and/or block views as well as a combination of steps and/or blocks of the flow charts and/or block views may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more steps of a flow chart and/or one or more blocks in a block view.

These computer program instructions may also be stored in a computer readable memory that may guide a computer or other programmable data processing device to operate in a particular manner, such that the instructions stored in the computer readable memory produce a manufacture including an instruction device. The instruction device realizes a function designated in one or more steps in a flow chart or one or more blocks in a block view.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more steps of the flow chart and/or one or more blocks in the block view.

The foregoing descriptions are only the preferred embodiments of the present disclosure, but do not serve to limit the present disclosure. Any amendment, equivalent replacement, improvement, and the like made within the spirit and principles of the present disclosure should all be contained within the protection scope of the present disclosure.

## Claims

1. A self-service pickup device, comprising:
an endless conveyor;
a self-service pickup port configured to receive a package pickup verification instruction; and
a first conveyor docked with the endless conveyor, and configured to convey a package between the endless conveyor and a temporary warehouse of the package,
wherein the endless conveyor is provided with a steering wheel device which is steerable and arranged at a junction of the endless conveyor and the self-service pickup port.

2. The self-service pickup device according to claim 1, wherein the steering wheel device is further arranged at a junction of the endless conveyor and the first conveyor.

3. The self-service pickup device according to claim 1, further comprising:
an automated transportation device configured to perform an outbound task and transport a target package from a target goods location of the temporary warehouse to a corresponding target first conveyor, or perform an inbound task and transport a target package from the corresponding target first conveyor to the target goods location of the temporary warehouse.

4. The self-service pickup device according to claim 1, further comprising:
a second conveyor docked with the endless conveyor, the second conveyor comprising at least one of an outlet conveying assembly or an inlet conveying assembly, wherein the inlet conveying assembly is configured to convey a normal package ready to enter the endless conveyor, and the outlet conveying assembly is configured to convey an abnormal package from the endless conveyor, or convey an empty turnover box from which a package was taken away from the endless conveyor.

5. The self-service pickup device according to claim 1, wherein the first conveyor comprises:
an inlet conveying assembly configured to convey an outbound package ready to enter the endless conveyor from the temporary warehouse; and
an outlet conveying assembly configured to convey an inbound package ready to enter the temporary warehouse from the endless conveyor.

6. The self-service pickup device according to claim 1, wherein the self-service pickup port is provided with a gravity detection device and a telescopic partition triggered by a gravity change, and a recycling place for an empty turnover box from which a package was taken away is provided below the telescopic partition.

7. The self-service pickup device according to claim 1, wherein the self-service pickup port is plural, or the first conveyor is plural.

8. The self-service pickup device according to any of claims 1 to 7, further comprising:
a control device configured to control the target steering wheel device to steer, or send an outbound task or an inbound task to the automated transportation device.

9. A self-service pickup method, comprising:
obtaining a package pickup verification instruction received by any target self-service pickup port, wherein there is a correspondence among the package pickup verification instruction, a number of a target goods location, a number of a target turnover box and a number of a target package;
transporting the target turnover box loaded with the target package corresponding to the package pickup verification instruction from the target goods location in the temporary warehouse to an outbound target first conveyor, the target turnover box entering the endless conveyor for rotation from the outbound target first conveyor; and
assigning a flow direction corresponding to the number of the target turnover box to a number of the target self-service pickup port, to control a first target steering wheel device to guide the target turnover box on the endless conveyor into the target self-service pickup port by steering, a user picking up a target package from the target self-service pickup port, wherein the first target steering wheel device is a steering wheel device at a junction of the target self-service pickup port and the endless conveyor.

10. The self-service pickup method according to claim 9, wherein transporting the target turnover box loaded with the target package corresponding to the package pickup verification instruction from the target goods location in the temporary warehouse to an outbound target first conveyor comprises:
generating and sending an outbound task to an automated transportation device for instructing the automated transportation device to transport the target turnover box from the target goods location in the temporary warehouse to the outbound target first conveyor, according to the number of the target goods location and the number of the target turnover box corresponding to the package pickup verification instruction, and a number of the outbound target first conveyor with a vacant position.

11. The self-service pickup method according to claim 10, wherein the outbound task comprises:
a delivery object, which is the number of the target turnover box;
a transporting departure, which is the number of the target goods location in the temporary warehouse; and
a transporting destination, which is the number of the outbound target first conveyor.

12. The self-service pickup method according to claim 9, wherein assigning a flow direction corresponding to the number of the target turnover box to a number of the target self-service pickup port comprises:
determining whether the target self-service pickup port has a cache resource;
assigning the flow direction corresponding to the number of the target turnover box to the number of the target self-service pickup port in response to the target self-service pickup port having a cache resource, or temporarily not assigning the flow direction corresponding to the number of the target turnover box in response to the target self-service pickup port having no cache resource to make the target turnover box rotate in the endless conveyor.

13. The self-service pickup method according to claim 9, further comprising:
in response to the target package not being picked up overtime, controlling the abnormal target turnover box to enter the endless conveyor for rotation via the first target rotating wheel device, and assigning a flow direction corresponding to the number of the target turnover box to outlet conveying assembly of the second conveyor to control the second target steering wheel device to guide the abnormal target turnover box on the endless conveyor into the outlet conveying assembly of the second conveyor by steering, to remove the abnormal target turnover box, wherein the second target steering wheel device is a steering wheel device at a junction of the outlet conveying assembly of the second conveyor and the endless conveyor.

14. The self-service pickup method according to claim 9, further comprising:
controlling the empty target turnover box to enter the endless conveyor for rotation via the first target steering wheel device after the target package is picked up, and assigning a flow direction corresponding to the number of the target turnover box to outlet conveying assembly of the second conveyor to control the second target steering wheel device to guide the empty target turnover box on the endless conveyor into the outlet conveying assembly of the second conveyor by steering, to remove the empty target turnover box, wherein the second target steering wheel device is a steering wheel device at a junction of the outlet conveying assembly of the second conveyor and the endless conveyor.

15. The self-service pickup method according to claim 9, further comprising:
prompting to remove the empty target turnover box after the target package is picked up; or
triggering a telescopic partition to retract in response to a gravity detection device at the target self-service pickup port detecting that a gravity above the telescopic partition is reduced to a preset range, to make the empty target turnover box fall to a recycling place for an empty turnover box below the telescopic partition, and then controlling the telescopic partition to automatically extend.

16. The self-service pickup method according to claim 10, further comprising:
updating the inventory status of the target goods location to unoccupied after the target turnover box is removed from the target goods location in the temporary warehouse; and
updating the status of the automated transportation device to a no-task status after the target turnover box is transported to the outbound target first conveyor.

17. The self-service pickup method according to claim 9, wherein the package pickup verification instruction is also correlated with a number of a target order, wherein the target order corresponds to one or more target packages, the self-service pickup method further comprising: updating order status of the target order to delivered after all the target packages are picked up.

18. The self-service pickup method according to claim 9, further comprising:
obtaining the number of the target turnover box identified and reported by a scanning device located at an inlet conveying assembly of a second conveyor, wherein the target turnover box loaded with the target package enters the endless conveyor via the inlet conveying assembly of the second conveyor before a user receives the package pickup verification instruction;
assigning the flow direction corresponding to the number of the target turnover box to a number of an inbound target first conveyor with a vacant position, and controlling a third target steering wheel device to guide the target turnover box on the endless conveyor to the inbound target first conveyor by steering, wherein the third target steering wheel device is a steering wheel device at a junction of the inbound target first conveyor and the endless conveyor;
assigning the number of the target goods location vacant in the temporary warehouse to the number of the target turnover box;
transporting the target turnover box from the inbound target first conveyor to the target goods location in the temporary warehouse; and
generating the package pickup verification instruction and informing the user, and establishing the correspondence among the package pickup verification instruction, the number of the target goods location, the number of the target turnover box and the number of the target package.

19. The self-service pickup method according to claim 18, wherein transporting the target turnover box from the inbound target first conveyor to the target goods location in the temporary warehouse comprises:
generating and sending an inbound task to the automated transportation device for instructing the automated transportation device to transport the target turnover box from the inbound target first conveyor to the target goods location in the temporary warehouse, according to the number of the inbound target first conveyor and the number of the target goods location in the temporary warehouse corresponding to the number of the target turnover box.

20. The self-service pickup method according to claim 19, wherein the inbound task comprises:
a transporting object, which is the number of the target turnover box,
a transporting departure, which is the number of the inbound target first conveyor, and
a transporting destination, which is the number of the target goods location in the temporary warehouse.

21. The self-service pickup method according to claim 18, further comprising:
updating the inventory status of the target goods location to occupied, or updating the status of the automated transportation device to a non-task status, after the target turnover box is transported to the target goods location in the temporary warehouse; or
releasing a cache resource of the inbound target first conveyor occupied by the target turnover box after the target turnover box is moved from the inbound target first conveyor.

22. A control device for self-service pickup, comprising:
a memory; and
a processor coupled to the memory, wherein the processor is configured to perform the self-service pickup method according to any of claims 9 to 21 based on instructions stored in the memory.

23. A non-transitory computer-readable storage medium storing a computer program, which is executed by a processor to realize the steps of the self-service pickup method according to any of claims 9 to 21.

24. A computer program comprising:
instructions, which are executed by a processor to perform the self-service pickup method according to any of claims 19 to 21.
